(19)

**Europäisches Patentamt**
**European Patent Office**
**Office européen des brevets**

(11) **EP 2 292 927 A2**

(12) **EUROPEAN PATENT APPLICATION**

(43) Date of publication:
**09.03.2011 Bulletin 2011/10**

(51) Int Cl.:
***F03D 3/02*** (2006.01)

(21) Application number: **10175625.2**

(22) Date of filing: **07.09.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **08.09.2009 BY 20091300**

(71) Applicants:
• **Klimov, Vyacheslav Stepanovich
  220044 Minsk (BY)**

• **Klimov, Oleg Vyacheslavovich
  3001 Elgava (LV)**

(72) Inventors:
• **Klimov, Vyacheslav Stepanovich
  220044 Minsk (BY)**
• **Klimov, Oleg Vyacheslavovich
  3001 Elgava (LV)**

(74) Representative: **Pistolesi, Roberto et al
  Dragotti & Associati Srl
  Via Marina 6
  20121 Milano (IT)**

(54) **Vertical axis windmill and method of increasing kinetic energy of air flow**

(57) Rotor-type super windmill based on logarithmic spiral-shaped load-bearing elements represents a single block of two vertical rotors having inverted curvature of load-bearing elements producing in the rotary mode in the inter rotor space circulation of velocity of both rotors in one direction and ensuring summation thereof with the velocity of the air flow.

Fig. 1

EP 2 292 927 A2

**Description**

Rotor-type super windmill and a method of increasing kinetic energy of air flow relate to wind power engineering and are meant for increasing kinetic energy of air flow to be further converted into mechanical energy.

The super windmill is based on logarithmic spiral-shaped load-bearing elements forming in the body of the rotors the evenly convergent bending channels- air collectors. The elements simultaneously increase kinetic energy of flow due to increase of velocity of motion thereof in the convergent channels and produce geometric summation of forces resulting from the reaction of the flow moving in the bending channel (1, page 113-114).

These characteristics are embodied in the known rotor windmill (2).

Known is the method of increasing kinetic energy of air flow by increasing velocity of motion thereof in the channels - air collectors as embodied in (3) by mounting coaxially in the center of the rotor windmill (2) an additional rotor of a substantially smaller diameter forming a low-pressure zone when it rotates in the centre of the rotor, the low-pressure zone drawing in with acceleration air mass of the flow through the channels-air collectors.

The present invention is aimed at developing a more efficient method of increasing kinetic energy of air flow as well as constructing the technical device for realizing the method and converting the flow of increased energy into mechanical rotation energy.

It is known that when physical bodies rotate in air flow around them in the boundary layer around the contour of the rotated body there occurs circulation of some part of the flow whose velocity is summed up with the velocity of main flow on that side of the rotated body where these velocities are codirectional (1, pages 202-203).

However the volume of air mass obtaining velocity gain is too small to find practical application.

To achieve the set goal the authors created the technical device - rotor-type super windmill- which thanks to its structure alone ensures velocity gain to the large volume of air mass of flow.

The essence of the invention consists in creating the inter rotor space between two vertical rotors with logarithmic spiral-shaped load-bearing elements having inverted curvature of surface in the rotors and ensuring in rotary mode in the inter rotor space velocity circulation of both rotors in one direction.

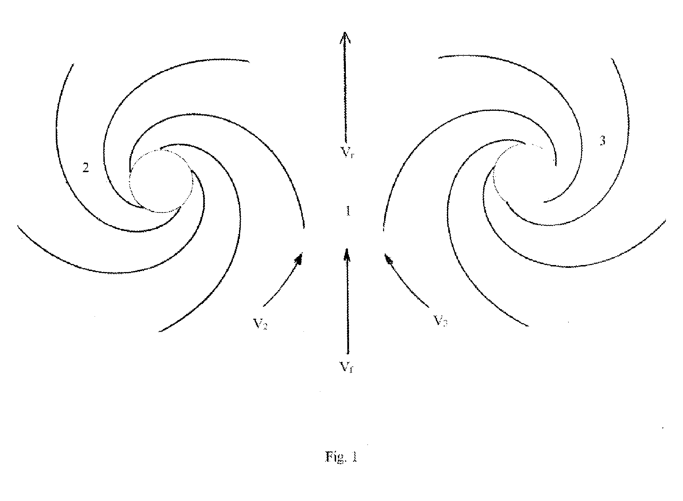

The technical solution of the invention is presented in Fig. 1.

The air flow at the velocity $V_f$ falls on the contour of the super windmill and cause rotors 2 and 3 to rotate. There appears circulation of the flow around each rotor at the velocity $V_2$ and $V_3$, wherein in the inter rotor space 1 the circulation has the same direction and is codirectional with the velocity of the main wind flow. So in the inter rotor space these velocities are summed up to produce resulting velocity, i.e.:

$$\mathbf{V_r = V_f + V_2 + V_3},$$

which makes up the essence of the method of increasing kinetic energy of air flow, mathematically expressed by the known formula:

$$N = \frac{\rho V^2}{2} = \frac{\rho V_r^2}{2} = \frac{\rho(V_f + V_2 + V_3)^2}{2},$$

(4, pages 50-51).

The motion of air flow at large velocity in the inter rotor space due to Bernoulli Law creates a vast low-pressure zone where under pressure of wind energy and atmospheric pressure all the air mass turns to, wherein the air mass falls on the contour of the structure of the super windmill rendering impact via its kinetic energy on the load-bearing elements of the rotors, thus setting the latter ones into rotary motion.

The authors created and tested the model of said technical device.

The test results proved high efficiency of the structure for converting the velocity of air flow and kinetic energy thereof into mechanical energy, which allows the authors to designate the invention with good reason as

**rotor-type super windmill.**

Literature:

1. Prandtle L. Fluid mechanics. M., 1951.
2. Patent of the Republic of Belarus BY 8019.
3. Patent application No. BYa 20071606.
4. Merkoulov V.I. Hydrostatics, known and unknown, M.,1989

**Claims**

1. **Rotor-type super windmill** comprising two parallel vertical rotors with logarithmic spiral-shaped load-bearing elements, **characterized in that** the rotors are combined into a single block forming the inter rotor space where the load-bearing elements of the rotors have inverted curvature of surface ensuring in the rotary mode in the inter rotor space velocity circulation of both rotors in one direction.

2. **The method** of increasing kinetic energy of air flow by the structure of the rotor-type super windmill according to claim 1, consisting in that the velocity of air flow and circulation of both rotors are summed up in the inter rotor space.

Fig. 1